# EUROPEAN PATENT SPECIFICATION

(11) **EP 3 982 791 B1**
(45) Date of publication and mention of the grant of the patent: **21.12.2022**
(21) Application number: 21798815.3
(22) Date of filing: 01.09.2021
(51) Int. Cl.: A47C 7/38, B60N 2/829, B60N 2/847

(54) **HEADREST LIFTING MECHANISM FOR UPHOLSTERED FURNITURE**
HEBEMECHANISMUS FÜR EINE GEPOLSTERTE MÖBELKOPFSTÜTZE
MÉCANISME DE LEVAGE D'APPUI-TÊTE POUR MEUBLE REMBOURRÉ

(30) Priority: 02.09.2020 PL 43518620
(43) Date of publication of application: 20.04.2022
(73) Proprietor: DFM Spolka z Ograniczona Odpowiedzialnoscia, 11-040 Dobre Miasto (PL)
(72) Inventor: DZIENISZEWSKI, Zdzislaw, 10-805 Olsztyn (PL)
(74) Representative: Krekora, Magdalena
(86) International application number: PCT/PL2021/000062
(87) International publication number: WO 2022/050857

(56) References cited:
- EP-A1- 3 516 995
- CN-A- 109 588 901
- CN-B- 109 588 901
- DE-U1-202018 101 158
- DE-U1-202018 104 018
- DE-U1-202019 103 032

## Description

The object of the invention is a mechanism for lifting the headrest of upholstered furniture, facilitating the adoption of a correct anatomical position for a seated person, particular for the cervical section of the spine subject degeneration.

Vehicle seat headrest is known from US patent description US7429082. The headrest includes: an impact cushion attached to the vehicle seat; a pivot axis extending transverse to the direction of travel of the vehicle, the pivot axis allowing rotation by spring action of the headrest into a used or unused locked position, at least a portion of the pivot axis being secured relative to the vehicle seat, a lever link installed in the impact cushion, the lever link comprising a plurality of rotatable lever arms connected to each other by a knee joint in a plane extending transverse to the pivot axis, distal of the first end the lever link positioned radially relative to the pivot axis and pivotally transmitted to the lever arm stationary relative to the cushioning pad, a positioning element located in the cushioning pad to lock the used position of the headrest, the link maintaining in the used position a torque limit between and the pivot axis so that the position of the lever arms is fixed relative to each other. The disadvantages of this arrangement are: firstly knee joint lever system, which requires significant headrest depths when the control motor is moved to the lower part of the backrest. Second disadvantage making it impossible to use in furniture is the system of reversing based on a compressed spring causing considerable sound discomfort, especially for people with hearing aids. In addition, the manual recline system is too unergonomic for medical or leisure furniture lines.

Known from European patent description EP2395962 is a two-part headrest with a chair holder adapted to be attached at one end thereof to the backrest of the chair. The headrest includes a base plate at the rear. One or more headrest brackets may be attached to the base plate at its first end. The first axis can be fixed to the second end of one or more headrest holders and the second axis can be fixed to the other end of one or more chair holders. The headrest includes a headrest locking mechanism in which the positioning assembly is movably coupled to the first axis at its first end and to the second axis at its second end. The disadvantage of this solution is that the distance between the rotational axes in the horizontal plane is too large, which implies oversized headrests, thus the aesthetics of the furniture. Another disadvantage is the ratchet locking system which prevents the power source of the rotational movement from being moved away

There is known from Polish patent description PL194396 a car seat headrest comprising a flexible body and means for adjusting the height of the flexible body relative to the seat back in the form of a pair of parallel brackets with series of positioning recesses made on at least one of the brackets and at least one of the sleeves, within which the brackets move of a suitable locking resilient element usually impermanently pressed against positioning recesses The headrest is characterized in that with the at least one inertia mass having shape of an elongated element with substantially flat bases is associated with resilient pressure element, the working surfaces are adapted in shape to: seat side wall and the resilient pressure element, the angle α between at least two tangents to the mating surfaces at their contact points lying on opposite sides of the inertia mass being smaller than the minimum friction angle for that pair of mating materials which has the larger friction angle. Furthermore, the inertia mass is slidably positioned in a through sleeve flange between the resilient pressure element therein and the wall. Inlets of the seat are positioned substantially in line with the direction of the longitudinal axis of the vehicle and furthermore the inertia mass on one of the flat bases has a recess interacting with the tooth of a latch connected to the flange within the seat.

The main disadvantages of such a design are: visible mechanism components causing damage to the upholstery and upholstery foam and a small range of headrest operation in relation to the volume necessary for the load-bearing elements to operate. The inertial mass also limits the possibility to move the drive to the lower part of backrest, which increases the size of the headrest and spoils the visual effect of furniture.

There is known from the Polish patent description PL196562 a tiltable vehicle headrest cushion of which includes internal movable frame and rotational frame pivotally connected to it, height control system, angular position adjustment system comprising a toothed segment associated with a spring associated with the sliding frame, and a securing system related to it. The headrest is characterized in that, close to the height adjustment system and the angular position adjustment system, it has a locking cam assembly consisting of a movement locking cam positioned close to the spring of the movement mechanism, rotation locking cam located close to the rotation mechanism spring and connected with slider cams controlled with a button positioned outside the cushion. The movement lock cam has a shape approximating a circular slice, is pivotally located on a vertical axis connected to the moving frame and is provided with a guide pin cooperating with the slider notch. Rotation locking cam, located pivotally on the axis level, of the shape close to the circular slice, tilted from the locking position with properly shaped slider part, is associated with the rotational frame. A disadvantage of this solution is the ratchet system. It works on the principle of applying human force, which lowers the functional properties of the premium furniture line. It is also a system very difficult to attenuate, especially in ratchets with an increased number of teeth for more precise angle adjustment.

Device for adjusting position of a headrest is known from publication WO2020094626A2. In order to improve an adjustment device for electrical adjustment of headrest position such that the entire adjustment device can be placed inside the headrest, according to the invention, the adjustment device has at least one spindle designed as a threaded spindle and at least one electric motor, and the electric motor is arranged to be movable relative to the spindle such that the rotational movement of the electric motor rotor causes translational movement of along the spindle, or the spindle is arranged to be movable relative to the electric motor such that the rotational movement of the electric motor rotor causes translational movement of the spindle. Adjustment device has a gear mechanism, and the gear mechanism is mechanically operatively connected to the spindle to convert the rotational movement of the rotor into translational movement of electric motor along the spindle or translational movement of the spindle.

The disadvantage of this type of solution is the stepper motor, it necessitates positioning in the main axis of rotation, which causes the overall dimensions of the headrest to be much bigger. Stepper motors in furniture are subject to more often changes of the position comparing to vehicle seats and their life with the same lifting force is much smaller when trimmed, than electric motors operating in reciprocating motion.

Known from European description EP3616984 is an adjustable headrest system for vehicle seat or motor vehicle seating arrangement with headrest bars which are mounted on the vehicle seat or seating arrangement and have locking recesses for height adjustment in the z-direction, extending in the x-direction which include snap-in recesses for length adjustment, a headrest comprising front and rear headrest members, a plurality of adjustment members on at least one of the two headrest members, a horizontal actuating slider with locking elements for locking and unlocking the headrest bars at a predetermined height in the z-direction relative to the headrest box, a plurality of vertical actuating sliders. With the device, the headrest can be adjusted in the z-direction as well as in the x-direction. Disadvantage of this solution is, as in PL196562, the ratchet system which is mostly manually actuated requiring a change of position while relaxing on the lounge furniture. Another headrest lifting mechanism is for example known from DE 20 2018 104018 U1.

There is known furniture headrests structure in which the effect of changing the position headrest is achieved by means of a scissor system actuated from motor installed in the lower part of the scissors, or manual systems in which the manual application of force overcomes frictional or ratchet resistance on the axis of rotation. The disadvantage of the systems used to date is the lack of safety for both the user and the upholstery materials used to cover the mechanism. They are subject to deformation or damage during the repeated cycles of folding and unfolding of the headrest. Other manual systems, although not capable of damaging foam or upholstery, require force, which reduces the comfort of using exclusive furniture. They also force the user to change the resting position in order to set the pre-set headrest position. On the other hand, systems based on a stepper motor, due to their location near main axis of rotation, make it impossible to move the power source away from the headrest (e.g. to backrest), and thus increase the overall dimensions of the headrests.

Mechanism for lifting the headrest of upholstered furniture consists of a top bracket in the shape of the letter "C" having two tabs, each with a hole. At ends of the top support there are lower tabs perpendicular to it and pointing downwards. A motor is attached to the top bracket. At the bottom part, the motor is fixed to a bracket with holes. At one and of the top bracket there is a tie-rod installed together with its movable extension. The longer arm of the extension has a surface that is bent at a right angle. A supporting flat bar for the headrest is attached to the bent surface. The longer arm of the extension is connected to the tie-rod by a friction or ratchet joint. The tie-rod is fixed axially to the support, preferably by a plastic sleeve, which is embedded in the top wall of the backrest. A slider is attached to one lower tab of the top support. The sliding slide has fastening holes and a pin, on which plastic profiled is mounted in a pivotable and non-moving manner. The profiled slide shoe moves in a linear guide attached to the sides of the target backrest.

Tie-rod with the extension, as an extension of the direction of the force coming from the movement of motor, acts on the bent surface. The longer arm of the extension fixes the selected range of angle for the supporting flat bar of the headrest, which is screwed to the bent surface. Range of movement of the longer arm is determined by a joint which limits the rotational movement to the assumed angular range of movement. At the other end of the top bracket, an analogous movable extension is fixed via a tie-rod and a sliding slider in surrounding mirror-image guide.

The solution of lifting the headrest allows to achieve high ergonomics of the furniture, reduces the risk of osteochondrosis, reduces the number of mechanical damages to spine and is especially useful for people with back ailments.

The object of the invention in the embodiment is illustrated in the figures.

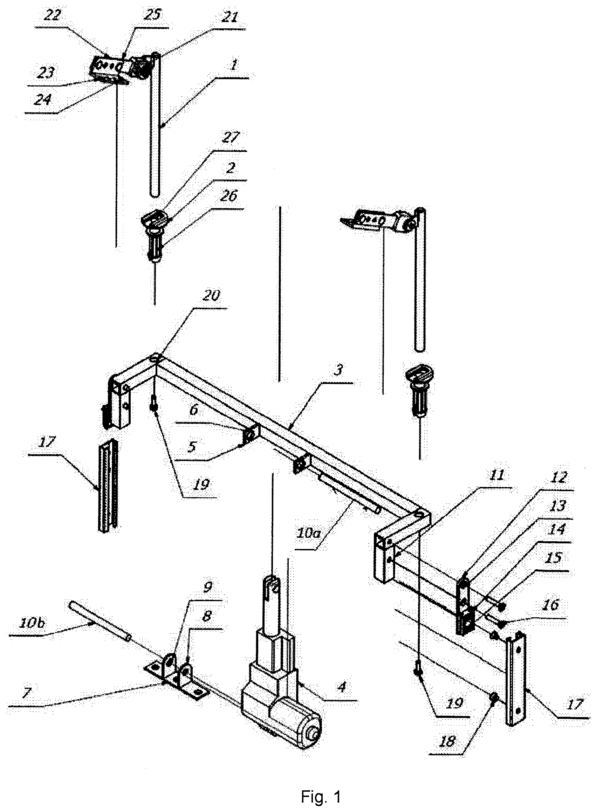

Fig. 1 presents the mechanism in an isometric exploded view.

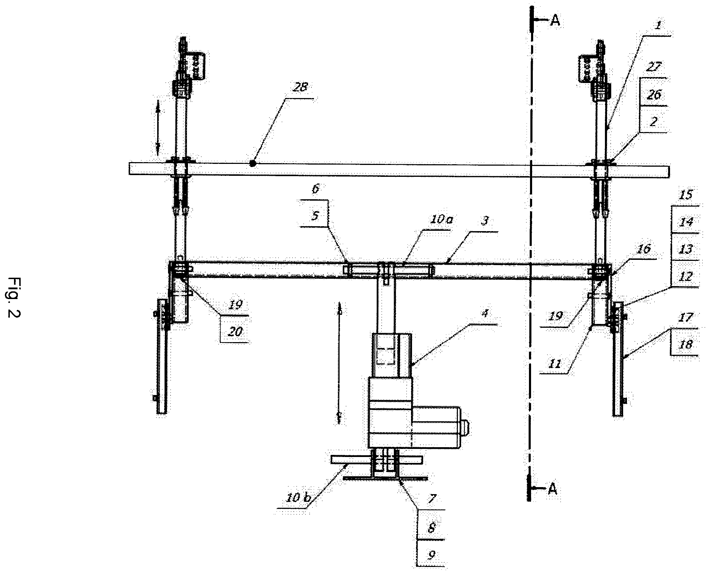

Fig. 2 presents the mechanism responsible for transferring the direction of movement in front view.

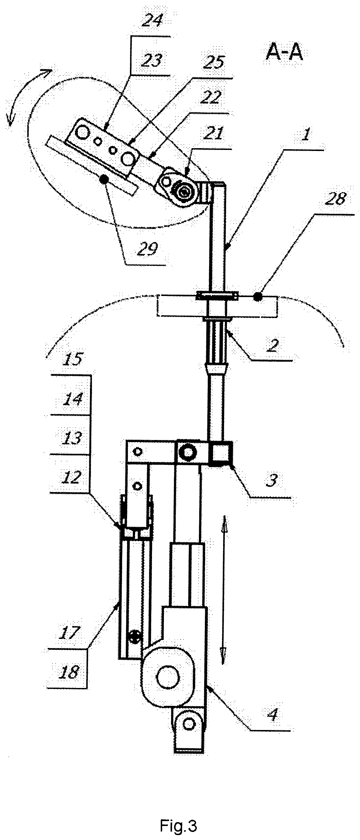

Fig. 3 presents a cross-section of the mechanism in side section A-A mounted in a piece of furniture.

The mechanism comprises a "C" shaped top bracket **3** having two tabs **5,** each with a hole **6.** At the ends of the top bracket **3** are lower tabs **11** perpendicular to it and pointing downwards. The motor **4** is attached to the top bracket **3** by means of a piercing pin **10a** located in the holes **6** of the tabs **5.** At the lower part, the motor 4 is fixed using another pin **10b** to a punched bracket **7** of the motor **4** of cross-section in the shape of "ττ", by fixing tab **8** with holes **9** to it. At one end of the top bracket **3,** a tie-rod 1 together with its extension **25** is fixed using screws **19** through holes **20.** The longer arm **22** of the extension **25** has a surface **23** bent at right angle with installation holes. A supporting flat bar **29** of the headrest is attached to the installation holes **24.The** longer arm **22** of extension **25** is connected to the tie-rod **1** of circular cross-section by a friction or ratchet joint **21.** The tie-rod **1** is axially fixed to the holes **20** of the support **3** by a plastic sleeve **2** with a pilot hole **27** and a guide sleeve **26.** Guide sleeve **2** is seated in the top wall of the backrest **28.** A slide **12** is fixed to one lower tab **11** of the top support **3** by means of a screw **16.** The slide **12** has fixing holes **13** for screws **16** and a pin **15,** on which plastic profiled slider 14 is fixed in a rotatably and non-moving manner. The profiled shoe **14** of the slider **12** moves linearly in a reciprocating motion in a guide **17** fixed by means of screws **18** to the sides of the target backrest. The tie-rod 1 together with the extension **25,** as an extension of the direction of the force coming from the movement of the motor **4,** acts on the bent surface **23.** The longer arm **22** of the extension **25** fixes the selected angle range for the supporting flat bar **29** of the headrest screwed through the holes **24** in the bent surface **23.** The range of movement of the longer arm **22** is determined by a joint **21** which limits the rotational movement to the assumed angular range of movement. At the other end of top bracket **3,** an analogous extension **25** is fixed via linkage **1** in the guide sleeve **2** and a sliding slider **12** in the surrounding mirror-image guide **17.**

The solution of lifting the headrest allows to achieve high ergonomics of the furniture, reduces the risk of osteochondrosis, reduces the number of mechanical damages to spine and is especially useful for people with back ailments.

## Claims

1. The upholstered furniture headrest lifting mechanism is provided with an electric motor and it consists of a top bracket (3) in the shape of the letter "C" having two tabs (5), each with an opening (6) and at the ends of the top bracket (3) there are lower tabs (11) perpendicular to it and pointing downwards, wherein the motor (4) is attached to the top bracket (3), which in its lower part is attached to a punched bracket (7), wherein at one end of the top bracket (3) a tie-rod (1) is attached together with its movable extension (25) and the longer arm (22) of the extension (25) has a right-angle bent surface (23) to which support flat bar (29) is attached and the longer arm (22) of the extension (25) is connected to the tie-rod (1) using a friction or ratchet joint (21), and wherein the tie-rod (1) is fixed axially to top bracket (3), while to one lower tab (11) of the top bracket (3) a sliding slider (12) is fixed, which has fixing holes (13) and a pin (15), on which a plastic profiled slider (14) is fixed in pivotable and non-moving manner, placed in the guide (17), wherein at the other end of the top bracket (3) an analogous movable extension (25) is fixed via a tie-rod (1) and a sliding slider (12) in a mirror-image surrounding guide (17).

2. Mechanism according to claim 1, **characterized in that** the tie-rod (1) is fixed axially to the top bracket (3) using a plastic sleeve (2).

## Patentansprüche

1. Hebemechanismus für eine gepolsterte Möbelkopfstütze, der mit einem Elektromotor versehen ist und der aus einer oberen Halterung (3) in Form des Buchstabens "C" besteht, der zwei Laschen (5) mit jeweils einer Öffnung (6) aufweist, und wobei an den Enden der oberen Halterung (3) senkrecht zu dieser und nach unten weisend untere Laschen (11) vorgesehen sind, wobei der Motor (4) an der oberen Halterung (3) befestigt ist, die in ihrem unteren Teil an einer gestanzten Halterung (7) befestigt ist, wobei an einem Ende der oberen Halterung (3) eine Zugstange (1) zusammen mit ihrer beweglichen Erweiterung (25) befestigt ist und der längere Arm (22) der Erweiterung (25) eine rechtwinklig gebogene Fläche (23) aufweist, an der eine flache Tragstange (29) befestigt ist, und der längere Arm (22) der Erweiterung (25) mit der Zugstange (1) unter Verwendung einer Reib- oder Rastverbindung (21) verbunden ist, und wobei die Zugstange (1) axial an der oberen Halterung (3) befestigt ist, während an einer unteren Lasche (11) der oberen Halterung (3) ein Gleitschieber (12) befestigt ist, der Befestigungslöcher (13) und einen Stift (15) aufweist, an dem ein Kunststoffprofilschieber (14) schwenkbar und unbeweglich befestigt ist, in der Führung (17) angeordnet, wobei am anderen Ende der oberen Halterung (3) eine analoge bewegliche Erweiterung (25) über eine Zugstange (1) und einen Gleitschieber (12) in einer spiegelbildlich umlaufenden Führung (17) befestigt ist.

2. Mechanismus nach Anspruch 1, **dadurch gekennzeichnet, dass** die Zugstange (1) axial an der oberen Halterung (3) unter Verwendung einer Kunststoffhülse (2) befestigt ist.

## Revendications

1. Le mécanisme de levage d'appui-tête pour meuble rembourré est fourni avec un moteur électrique et consiste en un support supérieur (3) en forme de lettre « C » ayant deux languettes (5) chacune munie d'une ouverture (6) et aux extrémités du support supérieur (3) sont prévues des languettes inférieures (11) perpendiculaires à celui-ci et dirigées vers le bas, dans lequel le moteur (4) est relié au support supérieur (3) et est fixé dans sa partie inférieure à un support perforé (7), dans lequel à l'une des extrémités du support supérieur (3) est fixée une barre de liaison (1) avec son extension mobile (25) et le bras prolongé (22) de l'extension (25) présente une surface inclinée à angle droit (23) à laquelle est fixée une tige de support plane (29) et le bras prolongé (22) de l'extension (25) est relié à la barre de liaison (1) par une articulation à ou à rochet (21), et dans lequel la barre de liaison (1) est fixée axialement au support supérieur (3), tandis qu'est fixée une glissière coulissante (12) à une languette inférieure (11) du support supérieur (3), qui comprend des trous de fixation (13) et une goupille (15), sur laquelle est fixée de manière pivotante et non-mobile une glissière profilée en plastique (14), placée dans le guide (17), dans lequel à l'autre extrémité du support supérieur (3) est fixée une extension mobile analogue (25) par l'intermédiaire d'une barre de liaison (1) et d'une glissière coulissante (12) dans un guide périphérique (17) disposé en correspondance comme dans un mirroir.

2. Mécanisme selon la revendication 1, caractérisé en que que la barre de liaison (1) est fixée axialement au support supérieur (3) en utilisant un manchon en plastique (2).
